# FASCICULE DE BREVET EUROPEEN

(11) **EP 4 275 784 B1**
(45) Date de publication et mention de la délivrance du brevet: **04.06.2025**
(21) Numéro de dépôt: 23162949.4
(22) Date de dépôt: 20.03.2023
(51) Int. Cl.: B01D 53/86, B01D 53/00, B01D 53/047, B01D 53/56, B01D 53/75

(54) **PROCÉDÉ ET APPAREIL DE PURIFICATION D'UN FLUX GAZEUX CONTENANT AU MOINS UN OXYDE D'AZOTE**
VERFAHREN UND VORRICHTUNG ZUR REINIGUNG EINES GASSTROMS MIT MINDESTENS EINEM STICKSTOFFOXID
PROCESS AND APPARATUS FOR PURIFYING A GAS STREAM CONTAINING AT LEAST ONE NITROGEN OXIDE

(30) Priorité: 09.05.2022 FR 2204347
(43) Date de publication de la demande: 15.11.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ANDRICH, Marine, 94503 CHAMPIGNY SUR MARNE (FR); RAVENTOS, Martin, 94503 CHAMPIGNY SUR MARNE (FR); GRANADOS, Ludovic, 94503 CHAMPIGNY SUR MARNE (FR); DUBETTIER-GRENIER, Richard, 94503 CHAMPIGNY SUR MARNE (FR)
(74) Mandataire: Air Liquide

(56) Documents cités:
- EP-B1- 2 176 165
- CN-A- 104 307 363
- CN-A- 110 385 011
- US-A- 5 362 463
- US-A- 5 525 317

## Description

La présente invention se rapporte à un procédé de purification d'un flux gazeux comprenant au moins un oxyde d'azote, par exemple du monoxyde d'azote NO et/ou du NO₂ par une unité de purification avec conversion du NO₂ sur lit catalytique.

Les oxydes d'azote (qui comprennent les NOx) sont des polluants généralement émis lors de la combustion de combustibles fossiles. Les NOx dans l'atmosphère créent de l'ozone troposphérique, qui est toxique lorsqu'il est inhalé et participe à l'effet de serre. De plus, les NOₓ contribuent à la formation des pluies acides, ce qui est préjudiciable à la vie végétale et animale, ainsi que des biens. Lors des étapes de traitement et de purification en présence d'eau, notamment de la compression (suivie d'une réfrigération), les NOₓ vont générer des condensats acides, notamment : acide nitrique et de l'acide nitreux

Il est donc préférable de mettre en œuvre un procédé de lavage des fumées permettant de les refroidir avant de les comprimer ainsi que d'enlever une partie des poussières qu'elles contiennent. Si le lavage est à haute pression, la conversion de NO vers le NO₂ est accélérée.

L'arrêt des oxydes d'azote peut être réalisé en utilisant :
- une colonne de lavage basse pression avec additif chimique ou non, ou
- une colonne de lavage a l'eau, de préférence sous pression, ou
- la séparation à basse température, en distillant et/ou en condensant partiellement les fumées de combustion riches en CO₂ comprenant des oxydes d'azote (NOₓ) où les oxydes d'azote dont l'oxydation est supérieure à celle du NO sont séparés des fumées. Un exemple d'un tel procédé est donné dans EP3145606A1 ;

Un SCR (Selective Catalytic Reduction ou réduction sélective catalytique) permet de convertir une partie des NOₓ (NO et NO₂) en N₂ et H₂O en les faisant réagir avec de l'ammoniac ou de l'urée au contact d'un catalyseur vers 200-400°C. La section de passage du réacteur SCR, le volume du réacteur catalytique et la quantité de catalyseur dépendent du débit volumique à traiter. De plus, le catalyseur a une durée de vie de l'ordre de 3-5 ans (nécessite un remplacement tous les 3-5ans). Le prix (capex) d'un SCR ainsi que sa taille dépendent donc du débit volumique à traiter.

Selon le procédé SCR, le gaz contenant des NOx mélangé par exemple à de l'ammoniac traverse ensuite un catalyseur a plusieurs lits dans une plage de températures comprises entre 250 et 380°C. Les catalyseurs les plus souvent utilisés sont des oxydes métalliques sur support TiO₂ ou Al₂O₃.

Un exemple de flux gazeux à traiter est le gaz généré par le four de réchauffage d'une unité de vaporeformage d'hydrocarbures, par exemple le reformage de méthane en présence de vapeur d'eau appelé en anglais « Steam Methane Reforming » ou SMR. Ce reformage permet la production d'hydrogène, vecteur énergétique qui joue un rôle croissant dans la décarbonatation de différents secteurs, notamment les transports et l'industrie. Dans les SMR, la production d'hydrogène s'accompagne d'une production importante de CO₂. Une unité de capture CO₂ peut être ajoutée à un SMR afin de réduire l'empreinte carbone de la production d'hydrogène par SMR. La capture de CO₂ (par exemple purification du CO₂ pour usage alimentaire ou pour séquestration) peut être réalisée par voie cryogénique ou par voie non cryogénique. Le CO₂ est transporté et séquestré si besoin soit sous pression soit sous forme liquide.

Sur un SMR, l'unité de capture CO₂ peut être placée sur les gaz résiduaires d'un PSA qui traite le produit du SMR ou sur les fumées (en anglais "flue gas") du four, produite par le procédé de production de chaleur nécessaire à la réaction chimique du reformage. L'avantage de la capture CO₂ sur les fumées est que cela permet de capturer jusqu'à 100% (probablement >80%) du CO₂ du SMR. Le CO₂ provient de la réaction de reformage du méthane si le gaz résiduaire du PSA est recyclé aux brûleurs du four et provient de la combustion des gaz dans les brûleurs du SMR afin de maintenir une température élevée dans le four.

Les SCR sont généralement placés en aval d'unités de combustion sur les fumées à basse pression. Par exemple, sur certains SMR, des SCR sont placés entre le four de combustion et la cheminée de rejets des fumées à l'atmosphère.

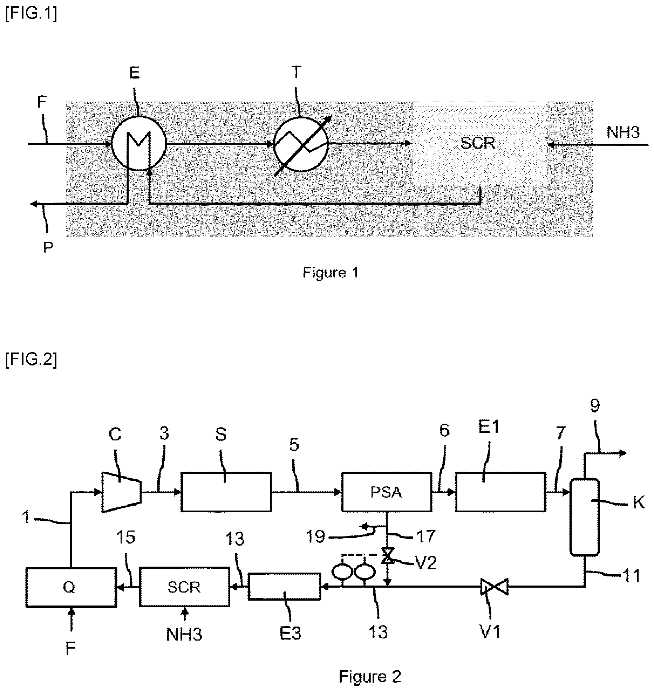

[FIG.1] illustre une unité de réduction catalytique sélective SCR, alimenté par un mélangé d'ammoniac NH₃ et d'air pour traiter un flux gazeux F contenant du dioxyde de carbone, de l'azote et du NO₂. Pour limiter la consommation énergétique nécessaire à remonter en température le courant F d'entrée du SCR en aval de l'unité de concentration en NOₓ, un échangeur économiseur E peut être ajouté pour récupérer une partie de la chaleur des produits P du SCR en préchauffant le courant d'entrée. L'appoint de chaleur pour compenser les pertes thermiques et la perte exégétique dans l'économiseur est assurée avec un réchauffeur d'appoint T (par exemple, électrique ou à gaz ou à vapeur d'eau, appelé en anglais « trim heater ≫).

Alternativement, l'apport de chaleur peut également être assuré par intégration thermique avec le reste du procédé, comme par exemple avec les fumées chaudes de l'unité de combustion.

EP2176165A1 porte sur le recyclage d'un courant enrichi en NO₂ en amont d'une unité de séparation (et en amont d'un SCR existant) qui produit un courant enrichi en CO₂, un courant appauvri en CO₂ (incondensables) et un courant enrichi en NO₂.

US5362463 décrit un procédé de purification d'un flux gazeux contenant des oxydes d'azote et de l'azote dans lequel :
i) Le flux gazeux est épuré par adsorption pour produire un débit enrichi en NOx et appauvri en azote et un fluide appauvri en NOx et enrichi en azote et
ii) Le débit enrichi en NO₂ est envoyé à une unité de conversion catalytique permettant la conversion d'au moins une partie du NO₂ en azote et en eau pour produire un gaz appauvri en NO₂. Ce document déconseille la présence d'ammoniac dans l'unité de conversion catalytique.

US5525317 décrit l'introduction d'air ou d'effluent gazeux comme fluide de dilution et de vaporisation d'ammoniac dans une unité SCR.

La présente invention concerne un SCR placé non pas en aval d'une unité de combustion sur les fumées à basse pression mais sur un courant préconcentré en NO₂ grâce à un ou des procédés de séparation en amont du SCR placés en série ou en parallèle de sorte que le débit à traiter soit plus faible. L'avantage d'une telle solution est de réduire significativement le CAPEX du SCR, le débit des fumées à traiter pouvant être 100 fois plus grand que le débit entrant dans le SCR. Un des inconvénients est que la température des fumées (-200-400°C nécessaire pour le SCR) n'est alors plus forcément disponible à l'entrée du SCR. De plus, le fait de concentrer en NO₂ le courant à traiter dans le SCR peut également amener à concentrer en certaines impuretés ce courant à l'entrée du SCR (par exemple SO₂).

Plus spécifiquement, l'unité de concentration en NO₂ en amont du SCR pourrait être avantageusement un concentrateur comme une unité PSA ou des membranes, ou une colonne à distiller opérée à une température inférieure à l'ambiant (par exemple avantageusement sur une plage de température entre [-40 ; 10]°C et un fluide à l'entrée de la colonne à distiller comportant >50%mol de CO₂ et <50%mol de N₂).

De plus, le courant préconcentré en NO₂ en sortie de l'unité de concentration en NOₓ peut comporter majoritairement du CO₂ (plage de concentration [50 ; 99,5]%mol) et de l'azote (plage de concentration [0.5 ; 50]%mol).

Le fait d'avoir à réchauffer le fluide d'entrée dans le SCR a l'avantage également de pouvoir choisir et réguler la température de réaction du SCR qui est un paramètre important qui influe sur les réactions chimiques ayant lieu dans le SCR. Dans l'application usuelle des SCR, la température des fumées est subie et non régulée.

De plus, afin de limiter les émissions de CO₂ et de NH₃ (provenant du NH₃ qui passe dans le SCR sans réagir) à l'atmosphère, les produits du SCR peuvent être recyclés dans le procédé (recycle fluidiquement connecté à l'unité de concentration en NO₂ en amont du SCR avec, entre les deux, d'autres opérations unitaires possibles telles qu'un moyen de compression et une unité de séchage du fluide).

Comme mentionné, l'unité de concentration en NO₂ peut également concentrer en d'autres impuretés comme les SOₓ (notamment du SO₂). Si tel est le cas, les SOₓ risquent de réagir avec le NH₃ pour former notamment de l'ammonium bisulfate (ABS) dans le SCR qui risque d'encrasser et de corroder le catalyseur et l'économiseur.

Pour limiter les risques de formation d'ABS, il est proposé selon l'invention de diluer le courant d'entrée du SCR avec un autre fluide (comme de l'azote résiduaire) (même si cela engendre une augmentation du débit volumique d'entrée dans le SCR).

Ce débit de dilution peut également permettre d'assurer un débit constant à l'entrée du SCR malgré une variation potentielle du débit sortant de l'unité de concentration en NO₂ et/ou d'apporter des constituants nécessaires au SCR comme le dioxygène (par exemple : colonne à distiller dont le débit de sortie liquide dépend du reflux liquide en tête de colonne).

Il devient ainsi possible de réduire ou d'éviter le débit d'air devant être envoyé au SCR avec l'ammoniac.

Il est également intéressant d'utiliser le débit de dilution même en absence de SOx afin de pouvoir ajuster la concentration et/ou le débit et/ou la température du gaz alimentant le SCR.

Selon un objet de l'invention, il est prévu un procédé de purification d'un flux gazeux contenant du NO et/ou du NO₂, du dioxyde de carbone et de l'azote dans lequel :
i) Le flux gazeux est épuré par adsorption pour produire un débit enrichi en dioxyde de carbone et en NOₓ et appauvri en azote et un fluide appauvri en dioxyde de carbone et en NOₓ et enrichi en azote,
ii) Le débit enrichi en dioxyde de carbone et en NOx et appauvri en azote est traité dans une unité de traitement pour former un fluide enrichi en NO₂ par rapport au débit traité,
iii) Le fluide enrichi en NO₂ est envoyé à une unité de conversion catalytique permettant la conversion d'au moins une partie du NO₂, en présence d'oxygène ainsi que d'ammoniac ou d'urée, en azote et en eau pour produire un gaz appauvri en NO₂ par rapport au fluide enrichi en NO₂, l'unité de conversion catalytique étant alimentée également par un fluide ayant de l'azote comme composant principal constitué par :
   - Au moins une partie du fluide appauvri en dioxyde de carbone et en NO₂ et enrichi en azote de l'étape i) et/ou
   - Un fluide à une pression supérieure à la pression du fluide à l'entrée de l'unité de conversion catalytique, obtenu en traitant au moins une partie du flux gazeux
      ou
   - Un fluide provenant d'une unité de séparation d'air ou d'un réseau.

Selon d'autres aspects facultatifs de l'invention :
- le fluide enrichi en NO₂ est chauffé en amont de l'unité de conversion catalytique
- on chauffe le fluide enrichi en NO₂ en amont de l'unité de conversion catalytique par échange de chaleur avec le gaz appauvri en NO₂
- le flux gazeux est un flux de fumées de combustion.
- les fumées de combustion proviennent en partie d'un four de reformage d'hydrocarbure, par exemple à la vapeur d'eau.
- au moins une partie du gaz appauvri en NO₂ produit par l'unité de conversion catalytique est envoyée se mélanger avec le flux gazeux en amont de l'adsorption, par exemple en l'envoyant à une tour de lavage du flux gazeux.
- l'unité de traitement produit en plus du fluide enrichi en NO₂ un produit appauvri en NO₂ et enrichi en CO₂, ce produit contenant de préférence au moins 80% mol de CO₂.
- l'unité de traitement comprend un appareil de séparation par condensation partielle et/ou par distillation alimentée à une température inférieure à 0°C, voire à -10°C.
- le flux gazeux contient du SOx.
- on varie le débit du fluide ayant de l'azote comme composant principal, par exemple du fluide appauvri en dioxyde de carbone et en NO₂ et enrichi en azote, envoyé à l'unité de conversion catalytique en fonction de la composition et/ou de la température et/ou du débit du fluide enrichi en NO₂ envoyé à l'unité de conversion catalytique.
- une partie du débit du fluide appauvri en dioxyde de carbone et en NO₂ et enrichi en azote est envoyée à une autre entité et/ou à l'air.
- le flux gazeux est traité par lavage à l'eau ou avec une solution alcaline, tel que. NaOH, Na2CO3, en amont de l'étape i).
- le fluide ayant de l'azote comme composant principal, par exemple le fluide appauvri en dioxyde de carbone et en NO₂ et enrichi en azote, contient au moins 90% mol d'azote, voire au moins 95% mol d'azote et de préférence au moins 1% mol d'oxygène voire au moins 2% d'oxygène.
- le fluide enrichi en NO₂ est réchauffé en amont de l'unité de conversion catalytique par échange de chaleur avec le gaz appauvri en NO₂.

Selon un autre objet de l'invention, il est prévu un appareil de purification d'un flux gazeux contenant du NO₂, du dioxyde de carbone et de l'azote comprenant une unité d'épuration par adsorption, une unité de traitement, une unité de conversion catalytique de NO₂, des moyens pour envoyer le flux gazeux à l'unité d'épuration par adsorption pour s'y séparer en un débit enrichi en dioxyde de carbone et en NO₂ et appauvri en azote et en un fluide appauvri en dioxyde de carbone et en NO₂ et enrichi en azote, des moyens pour envoyer le débit enrichi en dioxyde de carbone et en NO₂ et appauvri en azote à l'unité de traitement pour former un fluide enrichi en NO₂ par rapport au débit traité, des moyens pour envoyer le fluide enrichi en NO₂ à l'unité de conversion catalytique permettant la conversion d'au moins une partie du NO₂ en présence d'ammoniac et d'oxygène en azote et eau pour produire un gaz appauvri en NO₂ par rapport au fluide enrichi en NO₂ et des moyens pour envoyer au moins ponctuellement un fluide ayant l'azote comme composant principal, par exemple au moins une partie du fluide appauvri en dioxyde de carbone et en NO₂ et enrichi en azote, à l'unité de conversion catalytique.

L'unité de traitement peut comprendre une colonne de distillation pour produire le fluide enrichi en NO₂ par rapport au débit traité et un gaz appauvri en NO₂ et des moyens pour séparer le gaz appauvri en NO₂ pour former un fluide riche en dioxyde de carbone. L'invention sera décrite de manière plus détaillée en se référant aux figures dont :
[FIG.2] illustre un procédé selon l'invention.
[FIG.3] illustre un détail d'un procédé selon l'invention.
[FIG.4] illustre un procédé selon l'invention.
[FIG.5] illustre un procédé selon l'invention.
[FIG.6] illustre un procédé selon l'invention.
[FIG.7] illustre un procédé comparatif.
[FIG.8] illustre un détail d'un procédé selon l'invention.
[FIG.9] illustre un détail d'un procédé selon l'invention.
[FIG.10] illustre un détail d'un procédé selon l'invention.

[FIG.2] illustre un procédé de purification d'un flux gazeux F comprenant du NO₂. Le débit F est un flux gazeux faisant partie des fumées d'un four de réchauffage d'une unité de reformage d'hydrocarbure pour produire un gaz contenant de l'hydrogène, par exemple le vaporeformage de méthane.

Le flux F contient du dioxyde de carbone, de l'azote et du NO et/ou du NO₂ ainsi qu'éventuellement au moins un des composants suivants : N₂O, SOx, oxygène, argon.

Typiquement il ne contient pas d'hydrogène ou de méthane voire seulement éventuellement des traces. L'oxydation de NO, quand présent, vers le NO₂ peut avoir lieu petit à petit pendant toutes les parties du procédé où l'oxygène et le NO sont présents dans la phase gazeuse. Le taux d'oxydation est plus élevé à des pressions élevées et des températures basses. L'oxydation est catalysée par les adsorbants tels que ceux présents dans le sécheur et le PSA.

Ce gaz F est produit à haute température et donc est refroidi par lavage à l'eau dans une tour de lavage Q pour produire un gaz refroidi 1. Le gaz refroidi 1 est comprimé par un compresseur C jusqu'à entre 5 et 15 bars abs et ensuite est séché dans un sécheur S par exemple par adsorption pour produire un gaz sec 5. Le gaz sec 5 est envoyé à une unité d'adsorption PSA avec variation de pression (en anglais « pressure swing adsorption » comportant plusieurs adsorbeurs travaillant en décalage de manière connue. L'unité PSA produit un débit 6 enrichi en dioxyde de carbone et en NO₂ et appauvri en azote et un fluide 17, 19 appauvri en dioxyde de carbone et en NO₂ et enrichi en azote ; le fluide 17, 19 contient éventuellement de l'oxygène.

Le débit 6 est refroidi dans un échangeur de chaleur E1 jusqu'à une température permettant la liquéfaction du NO₂ dans le débit 6 produisant un fluide refroidi 7 qui est séparé par distillation et/ou condensation partielle. Ici on voit une colonne de distillation K produisant un débit 9 appauvri en NO₂ et un liquide de cuve 11 enrichi en NO₂. Le liquide 11 est vaporisé (non illustré) pour produire un gaz qui est détendu dans une vanne V1 et envoyé comme gaz 13 pour être traité dans l'unité de réduction sélective catalytique SCR après réchauffage dans l'échangeur de chaleur E3.

L'unité de réduction SCR est alimenté par de l'ammoniac et/ou de l'urée ainsi que par une source d'oxygène, par exemple de l'air si le gaz 13 ne comprend pas suffisamment d'oxygène. Une injection d'air peut toutefois être nécessaire pour atomiser l'ammoniac ou l'urée. L'unité SCR produit un gaz 15 dans lequel le NO₂ a été en partie converti en azote et en eau. Ce gaz est envoyé à la tour de lavage 15 pour récupérer le dioxyde de carbone qu'il contient. Cela permet également d'éviter d'envoyer de l'ammoniac à l'atmosphère.

Au moins une partie 17 du gaz appauvri en dioxyde de carbone et en NO₂ et enrichi en azote peut être mélangée avec le gaz 11 pour former le gaz 13. La vanne V2 règle la quantité de gaz 17 mélangé avec le gaz 11, cette vanne étant commandée par un FIC pour détecter le débit du fluide 13 et/ou par un AIC pour détecter la teneur d'un composant du fluide 13.

Une autre partie 19 du gaz appauvri en dioxyde de carbone et en NO₂ et enrichi en azote peut être envoyée à l'atmosphère.

Le gaz 17 est plus riche en azote que le liquide vaporisé 11 et donc permet d'enrichir le liquide vaporisé 11 en azote. Le gaz 17 est également plus riche en oxygène que le liquide vaporisé 11 et permet d'enrichir le gaz 11 en oxygène pour réduire la quantité d'oxygène à envoyer à l'unité SCR d'une autre source si besoin.

L'azote a l'avantage d'être un gaz neutre qui n'influence pas les mécanismes réactionnels dans la chambre de réaction du SCR (contrairement à l'air qui contient de l'O₂).

Si le gaz 5 contient au moins un SOₓ, le SOₓ risque d'être présent dans le gaz 13, voire d'être enrichi par les traitements en amont. Il y a donc un danger que l'au moins un SOₓ (notamment du SO₂) réagisse avec le NH₃ pour former notamment de l'ammonium bisulfate (NH₄) HSO₄ (ABS) qui risque d'encrasser et de corroder le catalyseur de l'unité SCR. Pour limiter les risques de formation d'ABS, on dilue le courant d'entrée 13 de l'unité SCR avec le fluide 17 riche en azote, contenant de préférence au moins 90% mol, voire au moins 95% mol d'azote et de préférence au moins 1% mol d'oxygène voire au moins 2% d'oxygène. Ceci peut engendrer une augmentation du débit volumique d'entrée dans l'unité SCR.

Ce débit de dilution 17 peut également permettre d'assurer un débit constant à l'entrée du SCR malgré une variation potentielle du débit 11 sortant de l'unité de concentration en NOx et/ou d'apporter des constituants nécessaires à l'unité SCR comme le dioxygène et/ou l'eau. Par exemple la colonne à distiller K a un débit de sortie liquide 11 qui dépend du reflux liquide en tête de colonne et le débit 11 est donc variable.

On ne peut empêcher de l'ABS de se former si l'unité SCR n'est pas opéré à suffisamment haute température. Ainsi, pour éliminer l'ABS formé, la température doit être augmentée jusqu'à 300-350°C, la réaction de formation de l'ABS étant réversible.

Le débit 17 peut être varié afin de viser un débit fixe (sur une certaine plage de variation) rentrant dans l'unité SCR. Ainsi si le débit 11 baisse, le débit 17 augmente et vice versa. Il sera également compris que selon des variantes de l'invention, le débit 17 rajouté au débit 11 peut être un gaz ayant pour composant principal de l'azote, provenant d'une source autre que l'unité PSA. Il peut provenir d'une autre unité traitant le gaz refroidi 1 et/ou d'un réseau, par exemple une canalisation transportant de l'azote et/ou un appareil de séparation d'air, par exemple par distillation cryogénique.

Alternativement le débit 17 peut être varié afin de viser une composition donnée. Par exemple, on peut viser un rapport donné entre la teneur en CO₂ et la teneur en azote du débit 13. On peut viser une teneur donnée en oxygène du débit 13 ou une teneur donnée en impuretés telles que le S0₂. L'ajout d'eau dans le débit 11 permet de réduire la formation de composés. En effet, l'eau joue le rôle d'inhibiteur pour certaines réactions chimiques indésirables ayant lieu dans l'unité SCR. En pratique de l'air est souvent ajouté au débit 13 d'entrée s'il y a besoin d'augmenter la concentration en O2 ou pour atomiser plus facilement l'ammoniac dans l'injecteur. Le procédé comprend l'ajout d'ammoniac ou d'urée dans l'unité SCR en amont de la chambre de réaction (dont la concentration en phase aqueuse peut potentiellement être ajustée en fonction du besoin en eau).

Le débit de dilution peut être caractérisé de la manière suivante :
- Concentration molaire en azote > 80%, de préférence > 90% et/ou
- Débit de débit 17 choisi de sorte à obtenir une concentration en N₂ > 20% à l'entrée de l'unité SCR et/ou
- Débit du débit 17 constituant entre 10% et 70% du débit molaire 11 par exemple dans certains cas de marche stabilisés et lors de phases transitoires et/ou
- Débit du débit 17 de sorte à obtenir une concentration en SO₂ < 5ppm molaire en entrée de l'unité SCR et/ou
- Débit du débit 17 de sorte à obtenir une concentration en O₂ > 1.5% molaire en entrée de l'unité SCR

Recycler le produit 15 de l'unité SCR dans le procédé est contre-intuitif pour l'homme de l'art sur la gestion des NOx. Généralement le produit du SCR est directement envoyé à l'atmosphère (SCR mis juste avant la cheminée / pot d'échappement pour réduire les NOx envoyés à l'atmosphère).

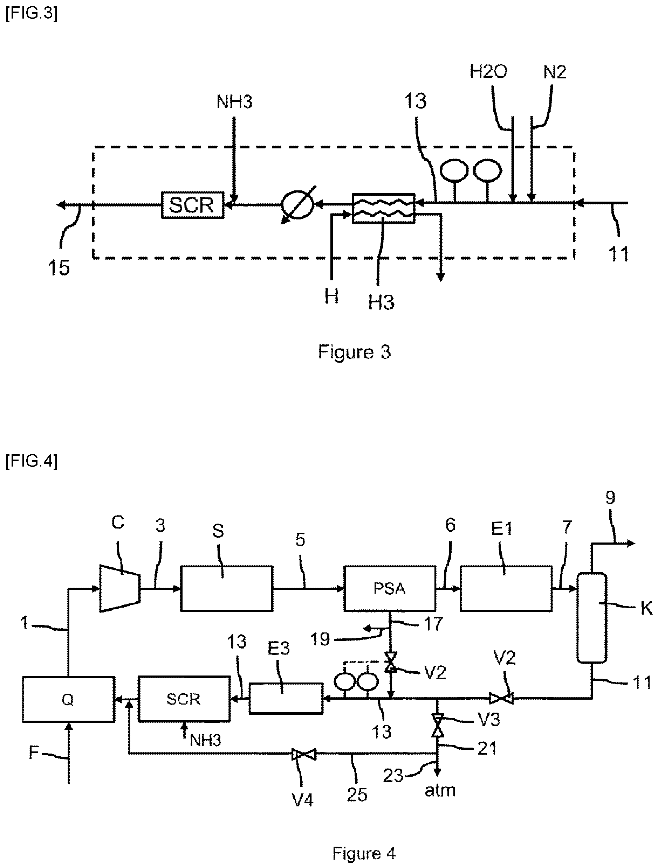

[FIG.3] montre le chauffage d'un échangeur de chaleur H3 en amont de l'unité SCR au moyen d'un calorigène H. On note que de l'eau et/ou de l'azote sont rajoutés en amont du FIC et du AIC.

[FIG.4] montre une variante de la [FIG.2] dans laquelle pour limiter la puissance installée du réchauffeur E3 en amont de l'unité SCR, une partie 25 du courant 11 entrant vers l'unité SCR peut contourner l'unité SCR (étant renvoyée en aval du SCR pour rejoindre le débit 15) ou comme débit 23 être envoyée à l'atmosphère durant les phases de régénération de l'ABS (-quelques heures 1 à 2 fois par an). De plus, une boucle ou un bypass est à prévoir pour permettre de régénérer l'économiseur. Les vannes V3 sur le débit 21 dont sont divisés les débits 23,25 et V4 sur le débit 25 permettent de réguler les quantités de gaz envoyés à l'air ou en aval de l'unité SCR.

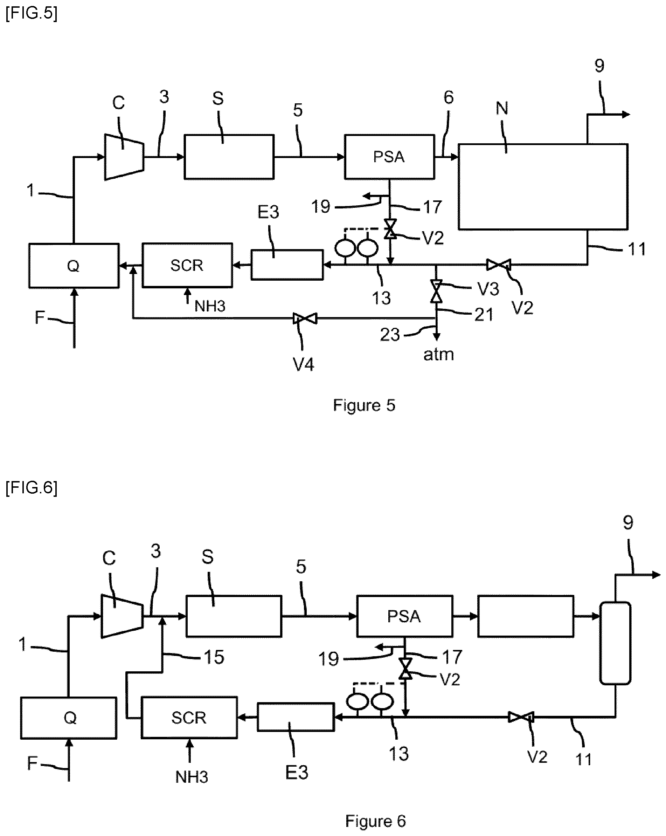

[FIG.5] montre une variante de la [FIG.4] dans laquelle l'unité de séparation de NOₓ N produit un débit appauvri en NO₂ 9 et un débit enrichi en NO₂ 11 mais n'implique pas nécessairement une séparation à basse température, par exemple une condensation partielle ou distillation. Toute manière connue de séparation de NO₂ peut être envisagée, par exemple par adsorption sur tamis moléculaire

Dans cette Figure, les débits 21, 23 ne sont pas obligatoirement présents.

[FIG.6] montre une variante de la [FIG.2] dans laquelle l'unité SCR opère à une pression entre 4 et 10 bars abs, compatible avec la pression de sortie ou avec une pression intermédiaire du compresseur C. Dans ce cas, le gaz 15 produit par l'unité SCR est envoyé en aval du compresseur C ou à un étage de compression intermédiaire de ce compresseur, de sorte que l'azote et le dioxyde de carbone que le gaz 15 contient soient recyclés.

Si l'unité SCR opère sous pression (typiquement à une pression légèrement supérieure à celle des sécheurs), ceci permet de réduire la taille de l'équipement et d'améliorer l'énergie spécifique en recyclant directement sous pression le gaz 15 produit par cette unité SCR en amont des sécheurs S.

On peut recycler le débit 15 en aval du compresseur C. Dans ce cas on doit comprimer le débit 17 en amont de l'entrée de l'unité SCR.

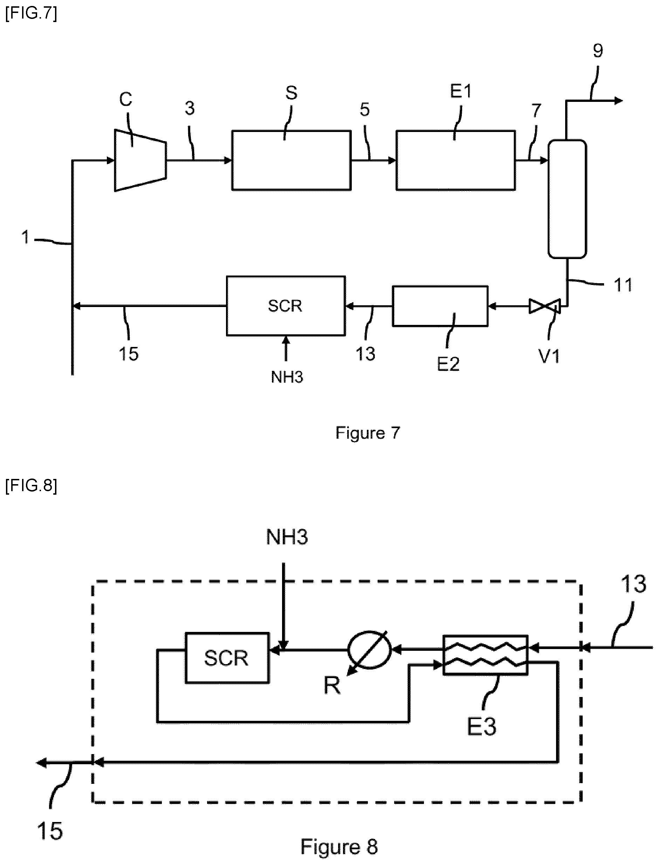

Sinon on peut recycler le débit 15 en inter-étage du compresseur C et dans ce cas on peut envoyer le débit 17 à l'entrée de l'unité SCR sans le comprimer. [FIG.7] montre une version comparative de la [FIG.2] sans l'unité de séparation d'azote par adsorption.

[FIG.8] illustre un détail d'un procédé selon l'invention montrant le réchauffeur R pour réguler la température en entrée du SCR. Le gaz 13 est un mélange du fluide enrichi en NO₂ 11 et le fluide 17 appauvri en dioxyde de carbone et en NO₂ et enrichi en azote. Il est réchauffé d'abord dans un échangeur de chaleur E3 par échange de chaleur indirect. Le gaz réchauffé est ensuite réchauffé par le réchauffeur et mélangé avec l'ammoniac pour atteindre la température requise pour l'unité SCR. Le gaz produit 15 est chaud et sert à chauffer l'échangeur E3 avant d'être envoyé à la tour Q.

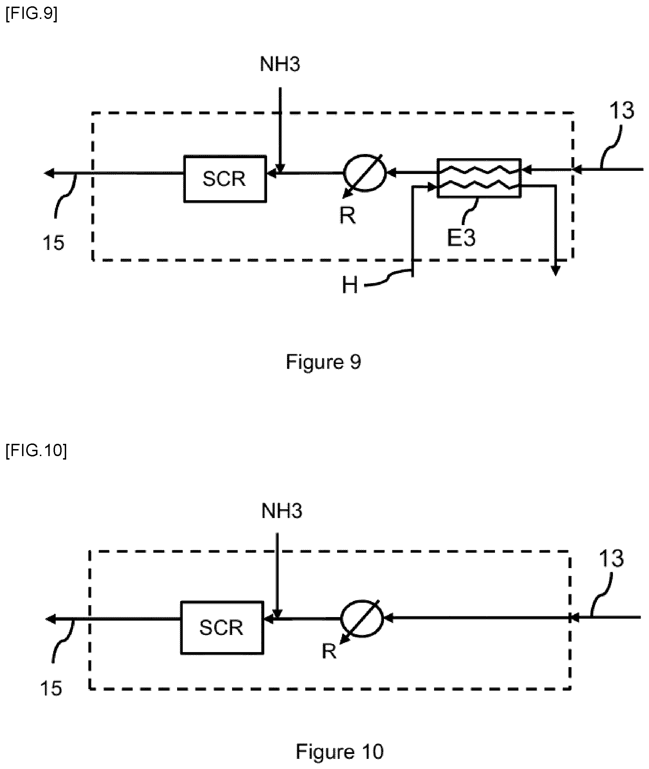

[FIG.9] est une variante de la [FIG.8] où l'échanger E3 est chauffé par un gaz calorigène H.

[FIG.10] illustre le cas où le gaz 13 est réchauffé uniquement par le réchauffeur R.

Dans tous les cas mentionnés, l'unité SCR peut être intégrée dans une unité de production d'un débit riche en CO₂ par exemple par condensation partielle et/ou distillation. Le débit 9 appauvri en NO₂ peut être traité par condensation partielle et/ou distillation dans un système de colonnes pour produire au moins un fluide riche en CO₂, par exemple contenant au moins 90% mol CO₂. De préférence le débit 9 n'est pas réchauffé mais est envoyé directement à la condensation partielle et/ou à la distillation. En amont de cette séparation froide, la plupart du NO, si présent, aura été converti en NO₂, qui coexiste avec le N₂O₄.

Afin de concentrer le flux à traiter en NO₂, un rebouilleur en cuve de la colonne à distiller K peut être ajouté (en option) en amont de l'unité SCR ou la température d'entrée du fluide 7 dans la colonne à distiller K peut être ajustée de sorte à obtenir un certain débit ou une certaine concentration en sortie de la colonne à distiller K.

Pour éviter les problèmes de corrosion dans l'économiseur, on choisira avec attention les matériaux (par exemple des aciers inoxydables...)

On pourra aussi alternativement, utiliser des matériaux moins nobles pour cet économiseur en régulant la température de sortie du fluide ayant réagi et en s'assurant qu'il reste au-dessus de son point de rosée. Pour cela, on prévoira aussi un réchauffeur en amont de l'économiseur sur le fluide à traiter

De préférence la séparation du NO₂ à basse température dans les unités K ou N a lieu dans la même enceinte thermiquement isolée que la séparation du fluide appauvri en NO₂ produit par la séparation du NO₂ pour produire un fluide contenant au moins 90% de CO₂.

## Revendications

1. Procédé de purification d'un flux gazeux (1,3,5) contenant du NO et/ou du NO₂, du dioxyde de carbone et de l'azote dans lequel :
i) Le flux gazeux est épuré par adsorption (PSA) pour produire un débit enrichi en dioxyde de carbone et en NOx et appauvri en azote (6) et un fluide appauvri en dioxyde de carbone et en NOx et enrichi en azote (17),
ii) Le débit enrichi en dioxyde de carbone et en NOx et appauvri en azote est traité dans une unité de traitement (E1, K) pour former un fluide enrichi en NO₂ (11) par rapport au débit traité,
iii) Le fluide enrichi en NO₂ est envoyé à une unité de conversion catalytique (SCR) permettant la conversion d'au moins une partie du NO₂, en présence d'oxygène ainsi que d'ammoniac ou d'urée, en azote et en eau pour produire un gaz appauvri en NO₂ (15) par rapport au fluide enrichi en NO₂, l'unité de conversion catalytique étant alimentée également par un fluide ayant de l'azote (17) comme composant principal constitué par :
• Au moins une partie du fluide appauvri en dioxyde de carbone et en NO₂ et enrichi en azote de l'étape i) et/ou
• Un fluide à une pression supérieure à la pression du fluide à l'entrée de l'unité de conversion catalytique, obtenu en traitant au moins une partie du flux gazeux ou
• Un fluide provenant d'une unité de séparation d'air ou d'un réseau.

2. Procédé selon la revendication 1 dans lequel le flux gazeux (1,3,5) est un flux de fumées de combustion.

3. Procédé selon la revendication 2 dans lequel les fumées de combustion proviennent en partie d'un four de reformage d'hydrocarbure, par exemple à la vapeur d'eau.

4. Procédé selon l'une des revendications précédentes dans lequel au moins une partie du gaz appauvri en NO₂ (15) produit par l'unité de conversion catalytique (SCR) est envoyée se mélanger avec le flux gazeux (1,3,5) en amont de l'adsorption, par exemple en l'envoyant à une tour de lavage du flux gazeux.

5. Procédé selon l'une des revendications précédentes dans lequel l'unité de traitement (K) produit en plus du fluide enrichi en NO₂ (11) un produit appauvri en NO₂ et enrichi en CO₂ (9), ce produit contenant de préférence au moins 80% mol de CO₂.

6. Procédé selon l'une des revendications précédentes dans lequel l'unité de traitement (K) comprend un appareil de séparation par condensation partielle et/ou par distillation alimentée à une température inférieure à 0°C, voire à -10°C.

7. Procédé selon l'une des revendications précédentes dans lequel le flux gazeux (1,3,5) contient du SOx.

8. Procédé selon l'une des revendications précédentes dans lequel on varie le débit du fluide ayant de l'azote comme composant principal (17), par exemple du fluide appauvri en dioxyde de carbone et en NO₂ et enrichi en azote, envoyé à l'unité de conversion catalytique en fonction de la composition et/ou de la température et/ou du débit du fluide enrichi en NO₂ envoyé à l'unité de conversion catalytique.

9. Procédé selon l'une des revendications précédentes dans lequel une partie (19) du débit du fluide appauvri en dioxyde de carbone et en NO₂ et enrichi en azote (17) est envoyée à une autre entité et/ou à l'air.

10. Procédé selon l'une des revendications précédentes dans lequel le flux gazeux est traité par lavage à l'eau ou avec une solution alcaline, tel que NaOH, Na₂CO₃, en amont de l'étape i).

11. Procédé selon l'une des revendications précédentes dans lequel le fluide (17) ayant de l'azote comme composant principal, par exemple le fluide appauvri en dioxyde de carbone et en NO₂ et enrichi en azote, contient au moins 90% mol d'azote, voire au moins 95% mol d'azote et de préférence au moins 1% mol d'oxygène voire au moins 2% d'oxygène.

12. Procédé selon l'une des revendications précédentes dans lequel le fluide enrichi en NO₂ (11) est réchauffé en amont de l'unité de conversion catalytique (SCR) par échange de chaleur avec le gaz appauvri en NO₂ (15).

13. Appareil de purification d'un flux gazeux (1,3,5) contenant du NO₂, du dioxyde de carbone et de l'azote comprenant une unité d'épuration par adsorption (PSA), une unité de traitement (K), une unité de conversion catalytique de NO₂ (SCR), des moyens pour envoyer le flux gazeux à l'unité d'épuration par adsorption pour s'y séparer en un débit enrichi en dioxyde de carbone et en NO₂ et appauvri en azote et en un fluide appauvri en dioxyde de carbone et en NO₂ et enrichi en azote, des moyens pour envoyer le débit enrichi en dioxyde de carbone et en NO₂ et appauvri en azote à l'unité de traitement pour former un fluide enrichi en NO₂ par rapport au débit traité, des moyens pour envoyer le fluide enrichi en NO₂ à l'unité de conversion catalytique permettant la conversion d'au moins une partie du NO₂ en présence d'ammoniac et d'oxygène en azote et eau pour produire un gaz appauvri en NO₂ par rapport au fluide enrichi en NO₂ (11) et des moyens pour envoyer au moins ponctuellement un fluide ayant l'azote comme composant principal (17), par exemple au moins une partie du fluide appauvri en dioxyde de carbone et en NO₂ et enrichi en azote, à l'unité de conversion catalytique.

14. Appareil selon la revendication 13 dans lequel l'unité de traitement comprend une colonne de distillation (K) pour produire le fluide enrichi en NO₂ (11) par rapport au débit traité et un gaz appauvri en NO₂ (9) et des moyens pour séparer le gaz appauvri en NO₂ pour former un fluide riche en dioxyde de carbone.

## Patentansprüche

1. Verfahren zur Reinigung eines NO und/oder NO₂, Kohlendioxid und Stickstoff enthaltenden Gasflusses (1,3,5), wobei:
i) der Gasfluss durch eine Adsorption (PSA) gereinigt wird, um einen mit Kohlendioxid und NOx angereicherten und an Stickstoff verarmten Strom (6) und ein an Kohlendioxid und NOx verarmtes und mit Stickstoff angereichertes Fluid (17) zu erzeugen,
ii) der mit Kohlendioxid und NOx angereicherte und an Stickstoff verarmte Strom in einer Behandlungseinheit (E1, K) behandelt wird, um ein Fluid (11) zu bilden, das in Bezug auf den behandelten Strom mit NO₂ angereichert ist,
iii) das mit NO₂ angereicherte Fluid zu einer Einheit zur katalytischen Umwandlung (SCR) geleitet wird, welche die Umwandlung zumindest eines Teils des NO₂ in Gegenwart von Sauerstoff sowie Ammoniak oder Harnstoff in Stickstoff und Wasser ermöglicht, um ein Gas (15) zu erzeugen, das in Bezug auf das mit NO₂ angereicherte Fluid an NO₂ verarmt ist, wobei der Einheit zur katalytischen Umwandlung auch ein Fluid (17) mit Stickstoff als Hauptbestandteil zugeführt wird, das aus Folgendem besteht:
• zumindest einem Teil des an Kohlendioxid und NO₂ verarmten und mit Stickstoff angereicherten Fluids von Schritt i) und/oder
• einem Fluid mit einem Druck, der höher als der Druck des Fluids am Einlass der Einheit zur katalytischen Umwandlung ist, das erhalten wird, indem zumindest ein Teil des Gasflusses behandelt wird, oder
• einem Fluid, das von einer Luftabscheidungseinheit oder einem Verbundnetz stammt.

2. Verfahren nach Anspruch 1, wobei es sich beim Gasfluss (1,3,5) um einen Abgasfluss handelt.

3. Verfahren nach Anspruch 2, wobei die Abgase teilweise von einem Ofen zum Reformieren von Kohlenwasserstoff, beispielsweise zur Dampfreformierung, stammen.

4. Verfahren nach einem der vorhergehenden Ansprüche, wobei zumindest ein Teil des an NO₂ verarmten Gases (15), das von der Einheit zur katalytischen Umwandlung (SCR) erzeugt wird, so geleitet wird, dass er sich mit dem Gasfluss (1,3,5) stromaufwärts von der Adsorption vermischt, beispielsweise, indem er zu einem Turm zum Waschen des Gasflusses geleitet wird.

5. Verfahren nach einem der vorhergehenden Ansprüche, wobei die Behandlungseinheit (K) außer dem mit NO₂ angereicherten Fluid (11) ein an NO₂ verarmtes und an CO₂ angereichertes Produkt (9) erzeugt, wobei dieses Produkt vorzugsweise mindestens 80 Mol-% CO₂ enthält.

6. Verfahren nach einem der vorhergehenden Ansprüche, wobei die Behandlungseinheit (K) eine Trennvorrichtung durch partielle Kondensation und/oder Destillation umfasst, die bei einer Temperatur unter 0 °C oder sogar -10 °C gespeist wird.

7. Verfahren nach einem der vorhergehenden Ansprüche, wobei der Gasfluss (1,3,5) SOx enthält.

8. Verfahren nach einem der vorhergehenden Ansprüche, wobei der Strom des Stickstoff als Hauptbestandteil aufweisenden Fluids (17), beispielsweise des an Kohlendioxid und NO₂ verarmten und mit Stickstoff angereicherten Fluids, das zur Einheit zur katalytischen Umwandlung geleitet wird, in Abhängigkeit von der Zusammensetzung und/oder der Temperatur und/oder vom Strom des mit NO₂ angereicherten Fluids, das zur Einheit zur katalytischen Umwandlung geleitet wird, variiert wird.

9. Verfahren nach einem der vorhergehenden Ansprüche, wobei ein Teil (19) des Stroms des an Kohlendioxid und NO₂ verarmten und mit Stickstoff angereicherten Fluids (17) zu einer anderen Einheit und/oder in die Luft geleitet wird.

10. Verfahren nach einem der vorhergehenden Ansprüche, wobei der Gasfluss durch Waschen mit Wasser oder mit einer alkalischen Lösung, wie NaOH, Na₂CO₃, stromaufwärts von Schritt i) behandelt wird.

11. Verfahren nach einem der vorhergehenden Ansprüche, wobei das Stickstoff als Hauptbestandteil aufweisende Fluid (17), beispielsweise das an Kohlendioxid und NO₂ verarmte und mit Stickstoff angereicherte Fluid mindestens 90 Mol-% Stickstoff oder sogar mindestens 95 Mol-% Stickstoff und vorzugsweise mindestens 1 Mol-% Sauerstoff oder sogar mindestens 2 % Sauerstoff enthält.

12. Verfahren nach einem der vorhergehenden Ansprüche, wobei das mit NO₂ angereicherte Fluid (11) stromaufwärts von der Einheit zur katalytischen Umwandlung (SCR) durch einen Wärmeaustausch mit dem an NO₂ verarmten Gas (15) erwärmt wird.

13. Vorrichtung zur Reinigung eines NO₂, Kohlendioxid und Stickstoff enthaltenden Gasflusses (1,3,5), die eine Einheit zur Reinigung durch Adsorption (PSA), eine Behandlungseinheit (K), eine Einheit zur katalytischen Umwandlung (SCR) von NO₂, Mittel zum Leiten des Gasflusses zur Einheit zur Reinigung durch Adsorption, um sich dort in einen mit Kohlendioxid und NO₂ angereicherten und an Stickstoff verarmten Strom und ein an Kohlendioxid und NO₂ verarmtes und mit Stickstoff angereichertes Fluid zu trennen, Mittel zum Leiten des mit Kohlendioxid und NO₂ angereicherten und an Stickstoff verarmten Stroms zur Behandlungseinheit, um ein Fluid zu bilden, das in Bezug auf den behandelten Strom mit NO₂ angereichert ist, Mittel zum Leiten des mit NO₂ angereicherten Fluids zur Einheit zur katalytischen Umwandlung, um die Umwandlung zumindest eines Teils des NO₂ in Gegenwart von Ammoniak und Sauerstoff zu Stickstoff und Wasser zu ermöglichen, wodurch ein Gas erzeugt wird, das in Bezug auf das mit NO₂ angereicherte Fluid (11) an NO₂ verarmt ist, und Mittel zum Leiten eines Stickstoff als Hauptbestandteil aufweisenden Fluids (17), beispielsweise zumindest eines Teils des an Kohlendioxid und NO₂ verarmten und mit Stickstoff angereicherten Fluids, zumindest zeitweise zur Einheit zur katalytischen Umwandlung umfasst.

14. Vorrichtung nach Anspruch 13, wobei die Behandlungseinheit eine Destillationskolonne (K), um das Fluid (11), das in Bezug auf den behandelten Strom mit NO₂ angereichert ist, und ein an NO₂ verarmtes Gas (9) zu erzeugen, und Mittel zum Abtrennen des an NO₂ verarmten Gases, um ein mit Kohlendioxid angereichertes Fluid zu bilden, umfasst.

## Claims

1. Process for the purification of a gas flow (1,3,5) containing NO and/or NO₂, carbon dioxide and nitrogen, in which:
i) the gas flow is purified by adsorption (PSA) in order to produce a flow enriched in carbon dioxide and in NOx and depleted in nitrogen (6) and a fluid depleted in carbon dioxide and in NOx and enriched in nitrogen (17),
ii) the flow enriched in carbon dioxide and in NOx and depleted in nitrogen is treated in a treatment unit (E1, K) in order to form a fluid enriched in NO₂ (11) with respect to the treated flow,
iii) the fluid enriched in NO₂ is sent to a catalytic conversion unit (SCR) which makes possible the conversion of at least a portion of the NO₂, in the presence of oxygen and also of ammonia or of urea, to give nitrogen and to give water in order to produce a gas depleted in NO₂ (15) with respect to the fluid enriched in NO₂, the catalytic conversion unit also being fed with a fluid having nitrogen (17) as main component consisting of:
• at least a portion of the fluid depleted in carbon dioxide and in NO₂ and enriched in nitrogen of stage i) and/or
• a fluid at a pressure greater than the pressure of the fluid at the inlet of the catalytic conversion unit, obtained by treating at least a portion of the gas stream, or
• a fluid originating from an air separation unit or from a network.

2. Process according to Claim 1, in which the gas flow (1,3,5) is a flow of combustion flue gases.

3. Process according to Claim 2, in which the combustion flue gases originate in part from a furnace for the reforming of a hydrocarbon, for example with steam.

4. Process according to one of the preceding claims, in which at least a portion of the gas depleted in NO₂ (15) produced by the catalytic conversion unit (SCR) is sent to be mixed with the gas flow (1,3,5) upstream of the adsorption, for example by sending it to a tower for scrubbing the gas flow.

5. Process according to one of the preceding claims, in which the treatment unit (K) produces, in addition to the fluid enriched in NO₂ (11), a product depleted in NO₂ and enriched in CO₂ (9), this product preferably containing at least 80 mol% of CO₂.

6. Process according to one of the preceding claims, in which the treatment unit (K) comprises an appliance for separation by partial condensation and/or by distillation fed at a temperature of less than 0°C, indeed even than -10°C.

7. Process according to one of the preceding claims, in which the gas flow (1,3,5) contains SOx.

8. Process according to one of the preceding claims, in which the flow rate of the fluid having nitrogen as main component (17), for example fluid depleted in carbon dioxide and in NO₂ and enriched in nitrogen, sent to the catalytic conversion unit, is varied as a function of the composition and/or of the temperature and/or of the flow rate of the fluid enriched in NO₂ sent to the catalytic conversion unit.

9. Process according to one of the preceding claims, in which a portion (19) of the flow of the fluid depleted in carbon dioxide and in NO₂ and enriched in nitrogen (17) is sent to another entity and/or to the air.

10. Process according to one of the preceding claims, in which the gas stream is treated by scrubbing with water or with an alkaline solution, such as NaOH or Na₂CO₃, upstream of stage i).

11. Process according to one of the preceding claims, in which the fluid (17) having nitrogen as main component, for example the fluid depleted in carbon dioxide and in NO₂ and enriched in nitrogen, contains at least 90 mol% of nitrogen, indeed even at least 95 mol% of nitrogen, and preferably at least 1 mol% of oxygen, indeed even at least 2 mol% of oxygen.

12. Process according to one of the preceding claims, in which the fluid enriched in NO₂ (11) is heated upstream of the catalytic conversion unit (SCR) by heat exchange with the gas depleted in NO₂ (15).

13. Appliance for the purification of a gas flow (1,3,5) containing NO₂, carbon dioxide and nitrogen comprising a unit for purification by adsorption (PSA), a treatment unit (K), a unit for the catalytic conversion of NO₂ (SCR), means for sending the gas flow to the unit for purification by adsorption in order to be separated therein into a flow enriched in carbon dioxide and in NO₂ and depleted in nitrogen and into a fluid depleted in carbon dioxide and in NO₂ and enriched in nitrogen, means for sending the flow enriched in carbon dioxide and in NO₂ and depleted in nitrogen to the treatment unit in order to form a fluid enriched in NO₂ with respect to the treated flow, means for sending the fluid enriched in NO₂ to the catalytic conversion unit making possible the conversion of at least a portion of the NO₂ in the presence of ammonia and of oxygen to give nitrogen and water in order to produce a gas depleted in NO₂ with respect to the fluid enriched in NO₂ (11) and means for sending at least from time to time a fluid having nitrogen as main component (17), for example at least a portion of the fluid depleted in carbon dioxide and in NO₂ and enriched in nitrogen, to the catalytic conversion unit.

14. Appliance according to Claim 13, in which the treatment unit comprises a distillation column (K) for producing the fluid enriched in NO₂ (11) with respect to the treated flow and a gas depleted in NO₂ (9) and means for separating the gas depleted in NO₂ in order to form a fluid rich in carbon dioxide.
